# EUROPEAN PATENT APPLICATION

(11) **EP 4 238 795 A1**
(43) Date of publication of application: **06.09.2023**
(21) Application number: 23159513.3
(22) Date of filing: 01.03.2023
(51) Int. Cl.: B60H 1/00, B60H 1/32

(54) **TRANSPORT REFRIGERATION SYSTEM WITHOUT VISIBLE PLUME**

(30) Priority: 01.03.2022 US 202263315317 P
(71) Applicant: Carrier Corporation, Palm Beach Gardens, FL 33418 (US)
(72) Inventor: van HASSEL, Bart Antonie, Palm Beach Gardens, 33418 (US)
(74) Representative: Dehns

(57) **Abstract**

A transport refrigeration system including a refrigeration unit including a plurality of components fluidly coupled to form a closed loop refrigeration circuit, and a power source configured to provide electrical power to the refrigeration unit, wherein an exhaust gas (C) generated by the power source is provided at an outlet of the power source, the exhaust gas (C) at the outlet of the power source is supersaturated and the outlet of the power source is fluidly coupled to an outlet of the transport refrigeration system, a source of at least one of heat and fluid (A₁) is coupled with the exhaust gas (C) at a location upstream from the outlet of the transport refrigeration system and the exhaust gas (C) at a location downstream from the source is not supersaturated.

## Description

### BACKGROUND

Embodiments of the present disclosure relate to refrigeration system, and more particularly, to transport refrigeration systems operating in low temperature ambient conditions.

Refrigerated trucks, trailers, and containers are commonly used to transport perishable cargo, such as, for example, produce, meat, poultry, fish, dairy products, cut flowers, pharmaceuticals, and other fresh or frozen perishable products. Conventionally, transport refrigeration systems include a refrigeration unit having a refrigerant compressor, a condenser with one or more associated condenser fans, an expansion device, and an evaporator with one or more associated evaporator fans, which are connected via appropriate refrigerant lines in a closed loop refrigerant circuit. Air or an air/gas mixture is drawn from the interior volume of the cargo box by means of the evaporator fan(s) associated with the evaporator, passed through the airside of the evaporator in heat exchange relationship with refrigerant whereby the refrigerant absorbs heat from the air, thereby cooling the air. The cooled air is then supplied back to the cargo box.

The transport refrigeration system typically uses power from sources like diesel engine. When the exhaust gas from such a diesel engine is discharged into the air in cold or low ambient temperature conditions, the gas appears as a plume due to the small water droplets entrained therein. Although the use of a fuel cell in place of a diesel engine will eliminate the emission of greenhouse gases, the exhaust of a hydrogen fuel cell is similarly saturated with water. When this exhaust is released into an environment on a warm day, the exhaust is not visible. However, in cold environments, the mixture of the saturated exhaust with the air generates a plume. Such a plume may impact the visibility of the driver, or may incorrectly suggest that something is wrong with the transport refrigeration system, the fuel cell, or the hydrogen storage system.

### BRIEF DESCRIPTION

According to an embodiment, a transport refrigeration system includes a refrigeration unit including a plurality of components fluidly coupled to form a closed loop refrigeration circuit. A power source is operable to provide electrical power to the refrigeration unit. An exhaust gas generated by the power source is provided at an outlet of the power source. The exhaust gas at the outlet of the power source is supersaturated and the outlet of the power source is fluidly coupled to an outlet of the transport refrigeration system. A source of at least one of heat and fluid is coupled with the exhaust gas at a location upstream from the outlet of the transport refrigeration system. The exhaust gas at a location downstream from the source is not supersaturated.

In addition to one or more of the features described herein, or as an alternative, in further embodiments the source of at least one of heat and fluid is waste heat from the refrigeration unit.

In addition to one or more of the features described herein, or as an alternative, in further embodiments the plurality of components fluidly coupled to form the closed loop refrigeration circuit includes a condenser, and the waste heat is ambient air output from the condenser.

In addition to one or more of the features described herein, or as an alternative, in further embodiments an outlet conduit extends from the outlet of the power source, and a flow of the ambient air is arranged in fluid communication with the outlet conduit such that the ambient air is mixed with the exhaust gas at a mixing point, the mixing point being located upstream from the transport refrigeration system outlet.

In addition to one or more of the features described herein, or as an alternative, in further embodiments the source of at least one of heat and fluid is waste heat from the power source.

In addition to one or more of the features described herein, or as an alternative, in further embodiments the refrigeration unit further comprises a coolant circuit including a radiator, the radiator being fluidly coupled to the power source, wherein the waste heat is ambient air output from the radiator.

In addition to one or more of the features described herein, or as an alternative, in further embodiments the plurality of components fluidly coupled to form the closed loop refrigeration circuit includes a condenser, and the radiator is arranged downstream from the condenser relative to a flow of the ambient air.

In addition to one or more of the features described herein, or as an alternative, in further embodiments an outlet conduit extends from the outlet of the power source, and a flow of the ambient air is arranged in fluid communication with the outlet conduit such that the ambient air is mixed with the exhaust gas at a mixing point, the mixing point being located upstream from the transport refrigeration system outlet.

In addition to one or more of the features described herein, or as an alternative, in further embodiments the source of at least one of heat and fluid includes an electric heating device.

In addition to one or more of the features described herein, or as an alternative, in further embodiments an outlet conduit extends from the outlet of the power source, and the source of at least one of heat and fluid includes a flow of air about an exterior of the outlet conduit, wherein a temperature of the air is less than a temperature of the exhaust gas.

In addition to one or more of the features described herein, or as an alternative, in further embodiments comprising at least one coalescing feature arranged in fluid communication with the outlet of the power source.

In addition to one or more of the features described herein, or as an alternative, in further embodiments the power source includes at least one fuel cell.

According to an embodiment, a method of operating a transport refrigeration system includes operating a power source to provide electrical power to at least one component within a closed loop refrigeration circuit. The method additionally including outputting an exhaust gas from an outlet of the power source, at least one of heating the exhaust gas and reducing a saturation of the exhaust gas, and expelling the exhaust gas from the transport refrigeration system into an ambient atmosphere.

In addition to one or more of the features described herein, or as an alternative, in further embodiments heating the exhaust gas further comprises operating an electric heating device operably coupled to the outlet of the power source.

In addition to one or more of the features described herein, or as an alternative, in further embodiments heating the exhaust gas further comprises mixing an ambient air provided from a condenser of the closed loop refrigeration circuit with the exhaust gas.

In addition to one or more of the features described herein, or as an alternative, in further embodiments heating the exhaust gas further comprises transferring waste heat from a coolant circuit to the exhaust gas.

In addition to one or more of the features described herein, or as an alternative, in further embodiments the transferring waste heat from the coolant circuit to the exhaust gas further comprises mixing an ambient air provided from a radiator of the coolant circuit with the exhaust gas, the radiator being fluidly coupled to the power source.

In addition to one or more of the features described herein, or as an alternative, in further embodiments reducing a saturation of the exhaust gas further comprises draining a fluid from the exhaust gas before expelling the exhaust gas from the transport refrigeration system into the ambient atmosphere.

In addition to one or more of the features described herein, or as an alternative, in further embodiments draining the fluid from the exhaust gas further comprises passing the exhaust gas over one or more coalescing features.

In addition to one or more of the features described herein, or as an alternative, in further embodiments reducing a saturation of the exhaust gas further comprises passing a flow of air about an outlet conduit of the power source, a temperature of the flow of air being less than a temperature of the exhaust gas within the outlet conduit.

### BRIEF DESCRIPTION OF THE DRAWINGS

The following descriptions should not be considered limiting in any way. With reference to the accompanying drawings, like elements are numbered alike:
FIG. 1 is a perspective view of an exemplary transport refrigeration system according to an embodiment;
FIG. 2 is a schematic illustration of an exemplary trailer refrigeration unit of a transport refrigeration system according to an embodiment;
FIG. 3 is a schematic diagram of an exemplary portion of a transport refrigeration system according to an embodiment;
FIG. 4 is a schematic diagram of an exemplary portion of a transport refrigeration system according to an embodiment;
FIG. 5 is schematic diagram of an exemplary portion of a transport refrigeration system according to an embodiment;
FIG. 6 is a psychrometric chart representing the temperature of the air, exhaust gas, and mixing points of FIGS. 3-5 according to an embodiment;
FIG. 7 is a schematic diagram of an exemplary outlet conduit of a power source according to an embodiment; and
FIG. 8 is a schematic diagram of an exemplary outlet conduit of a power source according to an embodiment.

### DETAILED DESCRIPTION

A detailed description of one or more embodiments of the disclosed apparatus and method are presented herein by way of exemplification and not limitation with reference to the Figures.

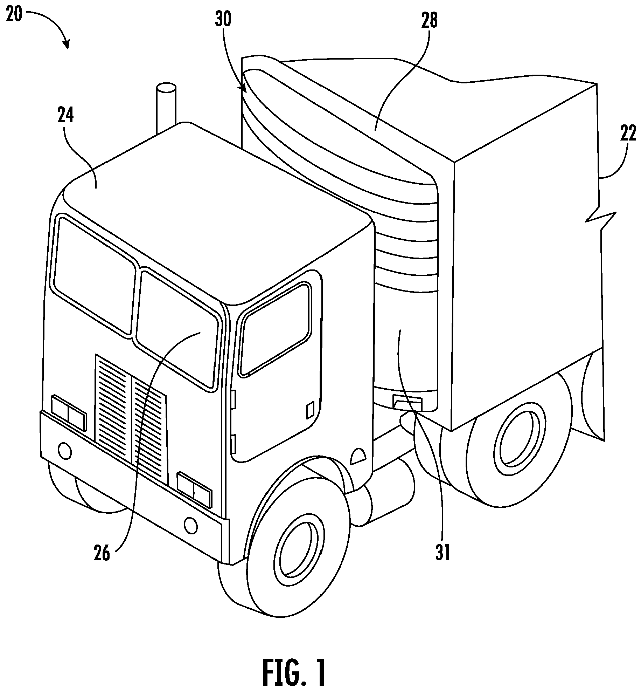

With reference now to FIG. 1, an exemplary transport refrigeration system 20 is illustrated. In the illustrated, non-limiting embodiment, the transport refrigeration system 20 is shown as a trailer system. As shown, the refrigerated container system 20 includes a cargo container or trailer 22 being towed or otherwise transported by a tractor 24 including an operator's compartment or cab 26 and also including an engine or other power source, such as a fuel cell for example, which acts as the drivetrain system of the transport refrigeration system 20. A refrigeration unit 30, al so referred to herein as a "trailer refrigeration unit" is configured to maintain cargo located within the container 22 at a selected temperature by cooling the cargo space of the container 22. As shown, the refrigeration unit 30 is typically mounted at the front wall 28 of the container 22. Together, the refrigeration unit 30 and the cargo container 22 may form a transport refrigeration system 20. It should be appreciated by those of skill in the art that embodiments described herein may be applied to any transport refrigeration system such as, for example shipping containers that are shipped by rail, sea (via a watercraft), or any other suitable container, without use of a tractor 24.

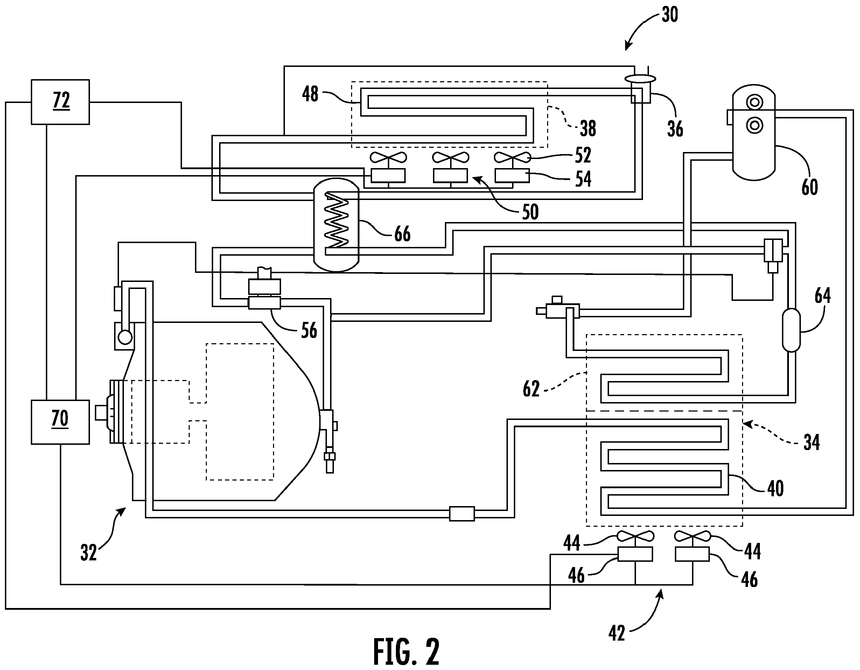

With reference now to FIG. 2, a schematic diagram of an exemplary refrigeration unit 30 is illustrated. The refrigeration unit 30 includes a compressor 32, a heat rejection heat exchanger or condenser 34, an expansion valve 36, and a heat absorption heat exchanger or evaporator 38 fluidly coupled to form a closed loop refrigeration circuit. During operation of the refrigeration unit 30, refrigerant R enters the compressor 32 and is compressed to a higher temperature and pressure. From the outlet of the compressor 32, the refrigerant gas is then provided to the condenser 34. In the illustrated, non-limiting embodiment, the condenser 34 is an air-cooled condenser such that a flow of air across the condenser coils 40 cools the refrigerant gas R to its saturation temperature. By removing latent heat, the refrigerant gas within the condenser 34 condenses to a high pressure/high temperature liquid. The air flow across the condenser 34 may be energized by a condenser fan assembly 42 including one or more fans 44, such as two fans for example. As shown, each fan 44 may be driven by a separate fan motor 46.

In a refrigeration unit 30 having a basic vapor compression cycle, the flow output from the condenser 34 is provided directly to a thermostatic expansion valve 36 and evaporator 38. As the liquid refrigerant R passes through the orifice of the expansion valve 36, some of it vaporizes into a gas. Return air from the refrigerated space flows over the heat transfer surface of an evaporator 38. As refrigerant flows through tubes 48 in the evaporator 38, the remaining liquid refrigerant R absorbs heat from the return air, and in so doing, is vaporized. The air flow across the evaporator 38 may be energized by an evaporator fan assembly 50 including at least one fan 52 and a corresponding fan motor 54. From the evaporator 38, the vapor then flows through a suction modulation valve 56 back to an inlet of the compressor 32. In an embodiment, a thermostatic expansion valve bulb or sensor (not shown) is located at an evaporator outlet tube. The bulb is intended to control the thermostatic expansion valve 36, thereby controlling refrigerant super-heating at the evaporator outlet tubing.

In the illustrated, non-limiting embodiment, the refrigeration unit 30 includes a plurality of components arranged between the condenser 34 and the expansion valve 36. As shown, a receiver 60 is arranged directly downstream from the outlet of the condenser 34. The receiver 60 is configured to provide storage for excess liquid refrigerant during low temperature operation. From the receiver 60, the liquid refrigerant R may pass through a subcooler heat exchanger 62. The subcooler 62 may be arranged in-line with and downstream from the condenser 34 such that the air flow from the fan assembly 42 moves across the condenser 34 and the subcooler 62 in series. In an embodiment, at the outlet of the subcooler 62, the refrigerant R is provided to a filter dryer 64 that keeps the refrigerant cool and dry, and in some embodiments to a heat exchanger 66 that increases the refrigerant subcooling. In such embodiments, the refrigerant provided at the outlet of this heat exchanger 66 is delivered to the thermostatic expansion valve 36.

In an embodiment, the refrigeration unit 30 includes a power source 70 that is capable of powering all of the electric components of the refrigeration unit 30. Such components include but are not limited to the electric motor associated with the compressor 32, and the fan motors 46,54 associated with both the condenser 34 and the evaporator 38 fan assemblies 42, 50. The power source 70 may include at least one fuel cell, such as a single fuel cell, or alternatively a plurality of fuel cells, suitable to provide enough power for all of the dynamic components of the refrigeration unit 30. In an embodiment, the fuel cell system with power electronics provides AC power as needed. The power source 70 may be located remotely from the remainder of the refrigeration unit 30, or alternatively, may be arranged within the housing 31 (FIG. 1) of the refrigeration unit 30.

A controller 72, such as a microprocessor, may be programmed to control power usage and the operation of various electrically powered components within the transport refrigeration system 20. For example, the controller 72 may be operable to regulate the power supplied to the condenser fan motors 46 and the evaporator fan motors 54. Programming such controllers may be within the skill in the art.

In an embodiment, the power source includes one or more hydrogen fuel cells. As is known in the art, a hydrogen fuel cell includes an anode configured to receive a fuel in the form of hydrogen and a cathode configured to receive an oxidant, such as oxygen or air. Oxygen that is not consumed by the fuel cell is expelled therefrom as a cathode exhaust gas C saturated with water which is generated as a by-product during operation of the fuel cell.

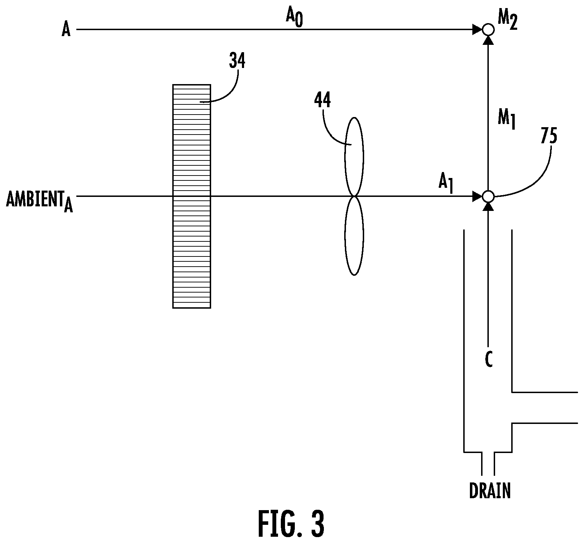

The exhaust gas C output from the power source 70 may be heated and/or diluted prior to being expelled into the ambient atmosphere surrounding the transport refrigeration system 20 to reduce the formation of a visible plume. In an embodiment, waste heat from one or more sources of the refrigeration unit are used as a heat source to heat the exhaust gas. For example, in an embodiment best shown in FIG. 3, the waste heat rejected at the condenser 34 is used to heat the ambient air before it mixes with the exhaust gas C. Heat is transferred from the high-pressure high temperature refrigerant within the condenser 34 to a flow of ambient air A as it passes over the heat transfer surface of the condenser 34. This heated air, having a temperature represented by A₁, which would normally be exhausted outside of the transport refrigeration system 20, is mixed with the exhaust gas C from the power source 70 at a mixing point 75. The resulting mixture of the exhaust gas C from the power source and the warmed ambient air A₁, represented by M₁, is at an intermediate temperature, between the temperature of the air A₁ and the temperature of the exhaust gas C. The dilution of the exhaust gas C with the warm air A1 reduces the supersaturation of the mixture at M1.

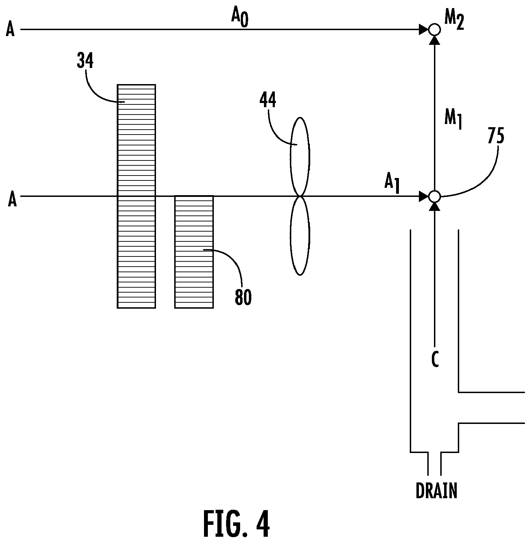

Alternatively, or in addition, the waste heat used to warm the ambient air A may be rejected from the power source 70. As best shown in FIG. 4, the refrigeration unit 30 includes a coolant circuit having a radiator 80 fluidly coupled to the power source 70. Similar to the condenser 34, heat is rejected from the coolant within the radiator 80 to a flow of ambient air A as it moves across the radiator 80. Although the radiator 80 is illustrated as being arranged downstream from the condenser 34 relative to the flow of air A in the FIG. 4, embodiments where the radiator 80 is not arranged in fluid communication with the condenser 34, such as where the radiator 80 is arranged in parallel with the condenser 34 relative to the air flow A for example, are also contemplated herein. In an embodiment, heat is transferred to the exhaust gas C by mixing the heated air A output from the radiator 80, also having a temperature represented by A₁, with the exhaust gas C from the power source 70, such as at mixing point 75. The dilution of the exhaust gas C with the warm air A1 reduces the supersaturation of the mixture at M₁.

The heated air A₁ is typically expelled from the housing 31 of the refrigeration unit 30 via one or more outlets, such as via one or more openings formed at the bottom or top or the sides thereof. In an embodiment, the location of the mixing point 75 where the heated air A₁ and the exhaust gas C are mixed is within the housing 31 of the refrigeration unit 30, at a location upstream from the outlet of the transport refrigeration system 20.

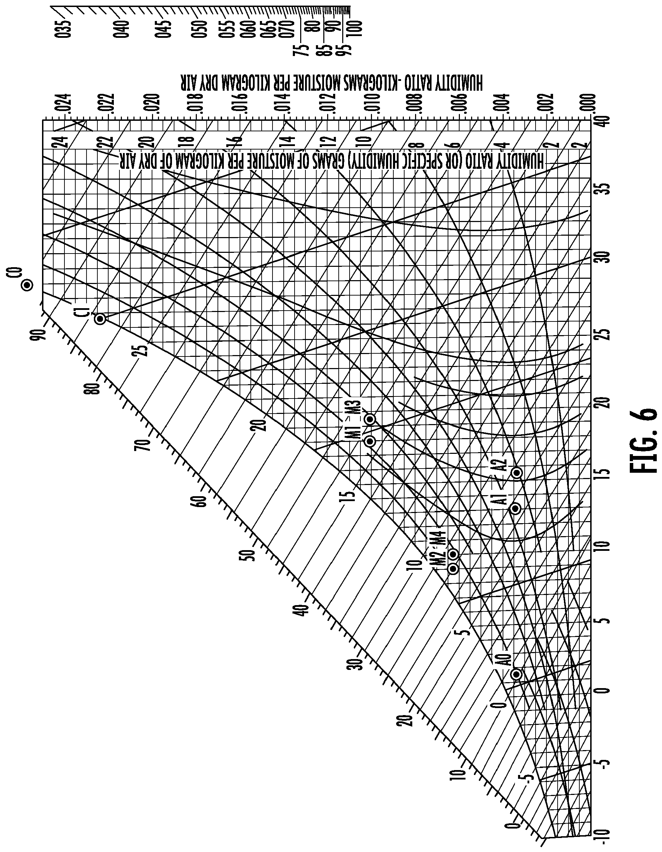

As can be seen in the psychrometric chart shown in FIG. 6, regardless of the source of the waste heat used to warm the exhaust gas C, minimal or no visible coalescence of moisture occurs when the mixture M₁ is exhausted overboard from the transport refrigeration system 20. When the mixture M₁ is exhausted overboard, the mixture M₁ is further mixed with the ambient atmosphere represented by A₀. This combination of mixture M₁ and the ambient atmosphere A₀ is represented by mixture M₂ in FIGS. 2 and 3 and occurs at an exterior of the transport refrigeration system 20.

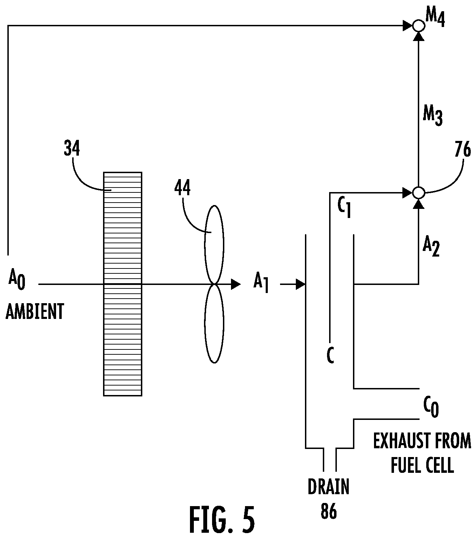

Alternatively, or in addition, the transport refrigeration system 20 may be designed to promote heat transfer at the interior surface 82 of the outlet conduit 84 from which the exhaust gas C is expelled. For example, with reference now to FIG. 5, in embodiments where the heated ambient air A₁ is colder than the exhaust gas C, passing the air A₁ about the exterior of the outlet conduit 84 will cool the exhaust gas and facilitate the formation of condensation at the interior surface 92 thereof. The resulting condensation will fall via gravity to a corresponding drain 86.

In such embodiments, the conduit 84 may be formed from a material having a high thermal conductivity to promote heat transfer and thereby increase the formation of condensation inside the conduit 84. Materials of the conduit 84 metal, composite, a polymer, or another other suitable material. The term polymer as used herein may be used to describe one or more of a rigid thermoplastic polymer, an elastomeric polymer, or any other suitable polymer or copolymer. Examples of a rigid thermoplastic polymer include, but are not limited to, polypropylene, polyamides such as nylon 6, nylon 6/6, nylon 6/12, nylon 11, nylon 12, and polyphthalamide, polyphenylene sulfide, liquid crystal polymers, polyethylene, polyaryl ether ketones such as polyether ether ether ketone, polyether ether ketone, and polyether ketone ketone, or any other suitable rigid thermoplastic polymer. Examples of an elastomeric polymer include, but are not limited to, elastomeric polymer such as fluoroelastomers, polyvinylidene fluoride, polytetrafluoro ethylene, silicones, fluorosilicones, ethylene propylene diene monomer (EPDM) rubber, polyurethane, or any other suitable elastomeric polymer.

As shown, the ambient air A output from the condenser 34 and/or the radiator 80 as previously described, and having a temperature represented by A₁, may be configured to pass over the exterior surface of the outlet conduit 84 prior to mixing with the exhaust gas. In such embodiments, the air has a temperature A₂ after passing over the outlet conduit 84 and the exhaust gas has a temperature represented by C₁ when mixed at mixing point 76. The mixture of heated air and exhaust gas A₂+C₁ is represented by M₃. Similar to the embodiments of FIGS. 3 and 4, the location of the mixing point 76 is within the housing 31 of the refrigeration unit 30, at a location upstream from the outlet of the transport refrigeration system 20.

Further, when the mixture M₃ is exhausted overboard, the mixture M₃ is further mixed with the ambient atmosphere represented by A₀. This combination of mixture M₃ and the ambient atmosphere A₀ is represented by mixture M₄ in FIG. 5 and occurs at an exterior of the transport refrigeration system 20. As shown on the psychrometric chart of FIG. 6, minimal or no visible coalescence of moisture occurs when the mixture M₃ is exhausted overboard from the transport refrigeration system 20 in embodiments where the ambient air is used to condense fluid from the exhaust gas C prior to being mixed therewith.

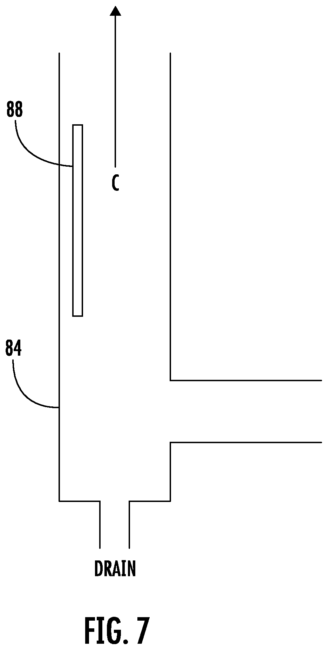

With reference now to FIG. 7, in an embodiment, a heating device 88, such as an electric heating device for example, is used to increase the temperature of the exhaust gas C output by the power source 70. An example of such a heating device 88 includes an electric resistance heater. However, any suitable heating device with within the scope of the disclosure. Further, although the heating device 88 is illustrated as being arranged within the interior of the outlet conduit 84 of the power source 70, embodiments where the heating device 88 is arranged at or adjacent to an exterior of the outlet conduit 84 are also contemplated herein. The heating device 88 may be used independently or in combination with waste heat from the refrigeration unit 30 to increase the temperature of the exhaust gas C prior to being expelled to the ambient atmosphere.

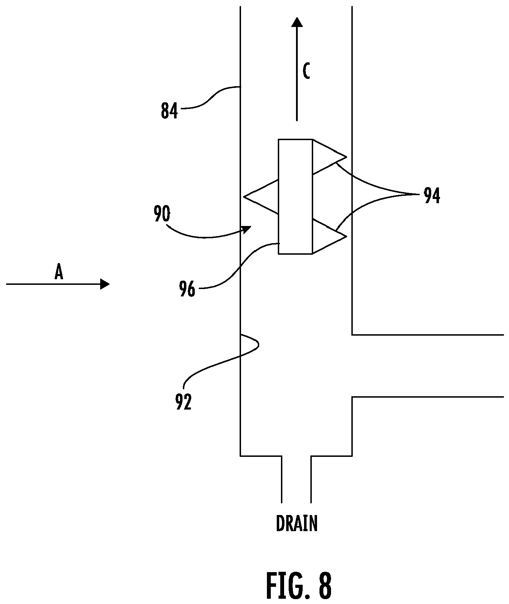

As previously noted, it may be desirable to enhance the condensation formed within the conduit 84 by the exhaust gas C, separately from or prior to heating the exhaust gas C. In an embodiment, best shown in FIG. 8, the outlet conduit 84 of the power source 70 configured to receive the exhaust gas C may include one or more coalescing features 90. The coalescing feature 90 may be configured to enhance the formation of a water stream adjacent to an interior surface 92 of the outlet conduit 84, thereby reducing the amount of water within the exhaust gas C provided at the transport refrigeration system outlet. In an embodiment, the at least one coalescing feature 90 includes one or more vanes 94 protruding outwardly from a periphery of the center body 96. As the exhaust gas C flows over the at least one coalescing feature 90, a swirl is imparted to the exhaust gas C. However, any suitable feature 90 configured to facilitate separation of the water from the exhaust gas C is within the scope of the disclosure.

In an embodiment, the exhaust gas may C be configured to pass through a muffler upstream from the outlet of the transportation refrigeration system 20. The muffler may be part of the outlet conduit 84 or may be arranged at another suitable location. The muffler may be operable to reduce the noise generated via the fuel cell power source 70.

A transport refrigeration system 20 including a refrigeration unit 30 as described herein will not generate a visible plume when the power source 70 of the refrigeration unit 30 is vented to the ambient atmosphere. Rather, the addition of heat to the exhaust gas C output from the fuel cell 70 and dilution with ambient air reduces the supersaturation of the exhaust gas C to prevent the formation of fog when exhausted overboard. It should be understood that the methods of reducing the formation of fog via the exhaust of the transport refrigeration system 20 may be performed when the transport refrigeration system 20 is stationary and while the transport refrigeration system 20 is moving or driving.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made and equivalents may be substituted for elements thereof without departing from the scope of the present invention. In addition, many modifications may be made to adapt a particular situation or material to the teachings of the present invention without departing from the scope thereof. Therefore, it is intended that the present invention not be limited to the particular embodiment disclosed, but that the present invention will include all embodiments falling within the scope of the claims.

## Claims

1. A transport refrigeration system (20) comprising:
a refrigeration unit (30) including a plurality of components fluidly coupled to form a closed loop refrigeration circuit;
a power source (70) operable to provide electrical power to the refrigeration unit, wherein an exhaust gas (C) generated by the power source is provided at an outlet of the power source, the exhaust gas at the outlet of the power source being supersaturated and the outlet of the power source being fluidly coupled to a transport refrigeration system outlet; and
a source of at least one of heat and fluid, the source being coupled with the exhaust gas at a location upstream from the outlet of the transport refrigeration system, wherein the exhaust gas at a location downstream from the source is not supersaturated.

2. The transport refrigeration system (20) of claim 1, wherein the source of at least one of heat and fluid is waste heat from the refrigeration unit (30).

3. The transport refrigeration system (20) of claim 2, wherein the plurality of components fluidly coupled to form the closed loop refrigeration circuit includes a condenser (34), and the waste heat is ambient air (A) output from the condenser.

4. The transport refrigeration system (20) of claim 3, wherein an outlet conduit (84) extends from the outlet of the power source (70), and a flow of the ambient air (A) is arranged in fluid communication with the outlet conduit such that the ambient air is mixed with the exhaust gas (C) at a mixing point (75), the mixing point being located upstream from the transport refrigeration system outlet.

5. The transport refrigeration system (20) of any preceding claim, wherein the source of at least one of heat and fluid is waste heat from the power source (70).

6. The transport refrigeration system (20) of claim 5, wherein the refrigeration unit further comprises a coolant circuit including a radiator (80), the radiator being fluidly coupled to the power source (70), wherein the waste heat is ambient air (A) output from the radiator.

7. The transport refrigeration system (20) of claim 6, wherein the plurality of components fluidly coupled to form the closed loop refrigeration circuit includes a condenser (34), and the radiator (80) is arranged downstream from the condenser relative to a flow of the ambient air (A), and/or
wherein an outlet conduit (84) extends from the outlet of the power source (70), and a flow of the ambient air is arranged in fluid communication with the outlet conduit such that the ambient air is mixed with the exhaust gas (C) at a mixing point (75), the mixing point being located upstream from the transport refrigeration system outlet.

8. The transport refrigeration system (20) of any preceding claim, wherein the source of at least one of heat and fluid includes an electric heating device, and/or,
wherein an outlet conduit (84) extends from the outlet of the power source (70), and the source of at least one of heat and fluid includes a flow of air about an exterior of the outlet conduit, wherein a temperature of the air is less than a temperature of the exhaust gas (C).

9. The transport refrigeration system (20) of any preceding claim, further comprising at least one coalescing feature (90) arranged in fluid communication with the outlet of the power source (70), and/or,
wherein the power source includes at least one fuel cell.

10. A method of operating a transport refrigeration system (20), the method comprising:
operating a power source (70), the power source being operable to provide electrical power to at least one component within a closed loop refrigeration circuit;
outputting an exhaust gas (C) from an outlet of the power source;
at least one of heating the exhaust gas and reducing a saturation of the exhaust gas; and
expelling the exhaust gas from the transport refrigeration system into an ambient atmosphere (A₀).

11. The method of claim 10, wherein heating the exhaust gas (C) further comprises operating an electric heating device operably coupled to the outlet of the power source (70).

12. The method of claim 10 or 11, wherein heating the exhaust gas (C) further comprises mixing an ambient air (A) provided from a condenser (34) of the closed loop refrigeration circuit with the exhaust gas.

13. The method of any of claims 10 to 12, wherein heating the exhaust gas further comprises transferring waste heat from a coolant circuit to the exhaust gas (C), optionally,
wherein the transferring waste heat from the coolant circuit to the exhaust gas further comprises mixing an ambient air (A) provided from a radiator (80) of the coolant circuit with the exhaust gas, the radiator being fluidly coupled to the power source (70).

14. The method of any of claims 10 to 13, wherein reducing a saturation of the exhaust gas (C) further comprises draining a fluid from the exhaust gas before expelling the exhaust gas from the transport refrigeration system into the ambient atmosphere (A₀), optionally,
wherein draining the fluid from the exhaust gas further comprises passing the exhaust gas over one or more coalescing features (90).

15. The method of any of claims 10 to 14, wherein reducing a saturation of the exhaust gas (C) further comprises passing a flow of air about an outlet conduit (84) of the power source (70), a temperature of the flow of air being less than a temperature of the exhaust gas within the outlet conduit.
